(19) Europäisches Patentamt
European Patent Office
Office européen des brevets

(11) **EP 1 447 650 A1**

(12) **EUROPÄISCHE PATENTANMELDUNG**

(43) Veröffentlichungstag:
**18.08.2004 Patentblatt 2004/34**

(51) Int Cl.⁷: **G01J 1/00**

(21) Anmeldenummer: **04002381.4**

(22) Anmeldetag: **04.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **12.02.2003 EP 03003021**

(71) Anmelder: **Goodrich Hella Aerospace Lighting Systems GmbH**
**59557 Lippstadt (DE)**

(72) Erfinder: **Tedeschi, Dirk**
**48249 Dülmen (DE)**

(74) Vertreter: **Hilleringmann, Jochen, Dipl.-Ing. et al**
**Patentanwälte**
**von Kreisler-Selting-Werner,**
**Postfach 10 22 41**
**50462 Köln (DE)**

(54) **Messverfahren zur Bestimmung der effektiven Lichtstärke einer impulsförmig betriebenen LED-Lichtquelle**

(57) Bei dem Messverfahren zur Bestimmung der effektiven Lichtstärke einer impulsförmig betriebenen LED-Lichtquelle unter Berücksichtigung der Physiologie des menschlichen Auges wird mittels eines licht-empfindlichen Detektors ein von der LED-Lichtquelle abgegebenes Mehrfachimpuls-Lichtsignal vermessen. Anschließend wird das vermessene Mehrfachimpuls-Lichtsignal einer Integration unterzogen. Die Integration erfolgt auf Basis der Formfaktormethode.

Fig.1 Graphische Darstellung der Netzhautreizfunktion

EP 1 447 650 A1

**Beschreibung**

Die Erfindung betrifft ein Messverfahren zur Bestimmung der effektiven Lichtstärke einer impulsförmig betriebenen LED-Lichtquelle, wobei die effektive Lichtstärke unter Berücksichtigung der Physiologie des menschlichen Auges und insbesondere der Rezeptoren des menschlichen Auges gemessen wird.

Zu Wartungszwecken ist es vielfach erforderlich, Signallichtquellen auf ihre Funktionstüchtigkeit hin zu untersuchen. Als ein Beispiel für eine derartige Signallichtquelle sei hier das Warnlicht (Anti-Collision-Light) von Flugzeugen genannt, das diskontinuierlich betrieben wird und impulsförmig Licht aussendet.

Diskontinuierlich betriebene Gasentladungslampen als Signallichtquellen erzeugen relativ schmale Lichtimpulse mit einer Länge von einigen wenigen Millisekunden (beispielsweise 5 Millisekunden), die allerdings recht lichtstark sind (bis zu 400 cd). Zur Berechnung der effektiven Lichtstärke der Lichtimpulse derartiger Lichtquellen bedient man sich des bekannten Verfahrens nach Blondel und Rey (SCHMIDT-CLAUSEN HANS-JOACHIM: "COMPARISON OF DIFFERENT METHODS FOR THE DETERMINATION OF THE EFFECTIVE LUMINOUS INTENSITY OF SIGNAL LIGHTS IN THE FORM OF MULTIPLE PULSES" CIE J MAY 1982, volume No. 1, May 1982 (1982-05), pages 18 to 22, XP009007847).

In zunehmendem Maße wird für diskontinuierlich betriebene Lichtquellen LED-Technologie verwendet. Der Vorteil von LED-Lichtquellen gegenüber Gasentladungs-Quellen ist insbesondere die längere Lebensdauer und die größere Funktionszuverlässigkeit. Mit LED-Lichtquellen lassen sich jedoch nur weniger lichtstarke Impulse erzeugen, als es bei Gasentladungs-Lichtquellen der Fall ist. Daher arbeitet man bei LED-Lichtquellen, die als Warnlampen eingesetzt werden, mit Doppel- oder Mehrfachblitzen. Um deren effektive Lichtstärke messtechnisch bestimmen zu können, kann man wegen der gegenüber Gasentladungslampen wesentlich geringeren Lichtimpulsintensität nicht nach den Messmethoden gemäß Schmidt-Clausen vorgehen.

Mit der Erfindung wird ein Messverfahren zur Bestimmung der effektiven Lichtstärke einer impulsförmig betriebenen LED-Lichtquelle unter Berücksichtigung der Physiologie der Rezeptoren des menschlichen Auges vorgeschlagen, bei dem mittels eines lichtempfindlichen Detektors ein von der LED-Lichtquelle abgegebenes Mehrfachimpuls-Lichtsignal vermessen wird, dessen Lichtimpulse voneinander einen Zeitabstand aufweisen, der kleiner ist als die Zeit, für die der Nachleuchteffekt der Rezeptoren des menschlichen Auges andauert, und mittels einer Auswerteeinheit das vermessene Mehrfachimpuls-Lichtsignal einer Integration unterzogen wird, wobei die Integration auf Basis der Formfaktormethode erfolgt.

Gemäß einer vorteilhaften Ausgestaltung der Erfindung weisen die Lichtimpulse voneinander einen Zeitabstand auf, der kleiner als 140 ms, vorzugsweise kleiner als 100 ms und insbesondere kleiner als 50 ms ist.

Zweckmäßigerweise beträgt die Dauer der Impulse mindestens 100 ms, vorzugsweise mindestens 150 ms.

Das erfindungsgemäße Messverfahren zur Berechnung der effektiven Lichtstärke eines Doppel- bzw. Mehrfachlichtimpulses einer LED-Lichtquelle basiert auf die Physiologie des menschlichen Auges. Hierbei wurde die Reaktion der Rezeptoren auf die Betrachtung von diskontinuierlichen LED-Lichtquellen hinsichtlich der Helligkeitsempfindung mit berücksichtigt. Dabei wird davon ausgegangen, dass das Auge auf zeitabhängige Signale träge reagiert. Zum einen ist bei der Betrachtung der aufsteigenden Flanke des ersten Impulses das Auge überrascht. Um eine maßlose Blendung zu vermeiden, erfolgt eine Unterbewertung des Helligkeitsempfindens. Der Impuls erscheint dem Betrachter dunkler. Dieser Effekt wird durch eine Zeitkonstante von 0.2 Sekunden nach Blondel und Rey beschrieben (SCHMIDT-CLAUSEN HANS-JOACHIM: "COMPARISON OF DIFFERENT METHODS FOR THE DETERMINATION OF THE EFFECTIVE LUMINOUS INTENSITY OF SIGNAL LIGHTS IN THE FORM OF MULTIPLE PULSES" CIE J MAY 1982, volume No. 1, May 1982 (1982-05), pages 18 to 22, XP009007847). Im Laufe der Impulsdauer beginnt die Adaptionsphase und das Auge gewöhnt sich an das Helligkeitsniveau. Die Empfindlichkeit der Rezeptoren steigt. Nach der abfallenden Flanke des ersten Impulses wird ein Nachleuchten wahrgenommen. Die Netzhaut hält das wahrgenommene Bild fest, so dass es vom nächsten Impuls überlagert wird. Erfahrungsgemäß liegt die Nachleuchtdauer im Bereich von 125 ms. Bei einer Verwendung einer Impulspause von 20 ms ist der Nachleuchteffekt sichtbar. Dabei nimmt innerhalb dieser Zeit die empfundene Leuchtdichte nur leicht ab. Der Doppelimpuls erscheint ein wenig unruhig, welches jedoch die Signalwirkung auf den Betrachter unterstützt. Somit kann messtechnisch der Doppelimpuls als ein zusammenhängendes Signal gewertet werden.

Die Erfindung wird nachfolgend unter Bezugnahme auf die Figuren näher erläutert. Im einzelnen zeigen:

Fig. 1    eine schematische Darstellung eines Doppellichtimpulses, dessen effektive Lichtintensität zu berechnen ist,

Fig. 2    eine schematische Darstellung einer gemessenen Doppelimpulssequenz und

Fig. 3    ein Blockdiagramm, das die wesentlichen Merkmale der Erfindung zeigt.

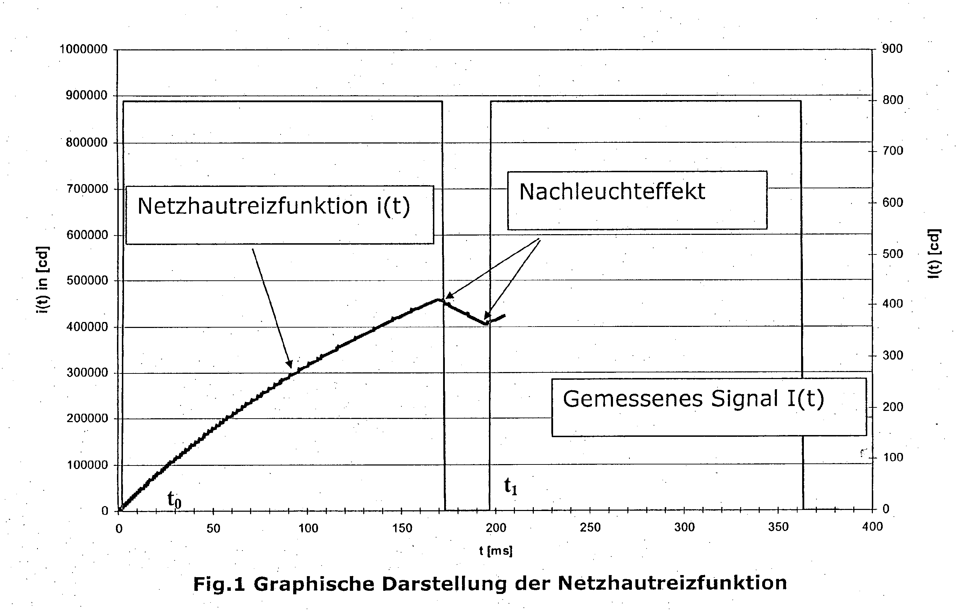

Im Folgenden wird die Reaktion der Netzhaut auf einen Lichtimpuls mathematisch und grafisch (Fig. 1) beschrieben. Hieraus wird ersichtlich, dass nach der abfallenden Flanke des ersten Impulses noch eine Reizung vorhanden ist (Nachleuchteffekt). Es gilt:

$$i(t) = \frac{1}{0.2s} \bullet \exp\left(\frac{-t}{0.2s}\right) \int_{t_0}^{t_1} I(t) \exp\left(\frac{t}{0.2s}\right) \, dt$$

mit

t = Zeitzähler in [s]

I(t) = Detektiertes Signal in [cd]

i(t) = Netzhautreizfunktion in [cd]

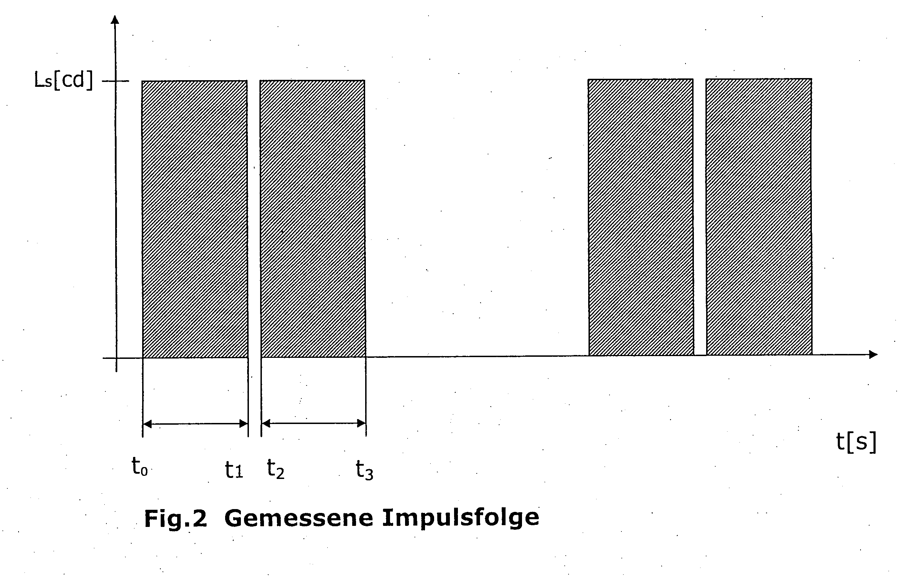

Fig. 2 zeigt eine mit dem Detektor gemessene Impulsfolge einer LED-Lichtquelle (in idealisierter Form). Die daraus resultierenden Messdaten sind tabellarisch aufgeführt und in der hier aufgeführten Formel zur Bestimmung der effektiven Lichtstärke implementiert.

Die Formel zur Bestimmung der effektiven Lichtstärke basierend auf der Formfaktormethode nach Schmidt-Clausen (siehe den eingangs zitierten Aufsatz; zur Formfaktormethode allgemein siehe OHNIO Y, NAKANO Y: "MINUTES OF CIE D1 D2 JOINT MEETING" MINUTES OF CIE MEETINGS, April 6, 2000 (2000-04-06), pages 1 to 5, XP002235453 Teddington) lautet:

$$I_{eff} = \frac{1}{\dfrac{C}{\displaystyle\sum_{n=0}^{\infty} \int_{t_n}^{t_{n+1}} i_n \, dt} + \dfrac{1}{I_S}}$$

mit

$$\sum_{n=0}^{\infty} \int_{t_n}^{t_{n+1}} i_n \, dt$$

= Summenintegral des Doppelimpulses (Gesamtbreite des Doppelimpulses mit Impulspause)

$I_S$ = Maximalwert in [cd]

C = Blondel und Rey Konstante (c = 0.2 s)

Der obige mathematische Ausdruck wird angewendet, wenn die direkt benachbarten Impulse unter Berücksichtigung des Nachleuchteffekts des menschlichen Auges als annähernd zusammenhängend betrachtet werden können.

**EP 1 447 650 A1**

Messwertbeispiel:

| Messparameter | Werte |
|---|---|
| Maximale Lichtstärke $I_s$ | 800 cd |
| $\int_{t_0}^{t_1} i_1\,dt$ | 120 cds |
| $\int_{t_2}^{t_3} i_2\,dt$ | 120 cds |

$$I_{eff} = \frac{1}{\dfrac{0.2s}{240\,cds} + \dfrac{1}{800\,cd}}$$

$$I_{eff} = 480 \text{ cd}$$

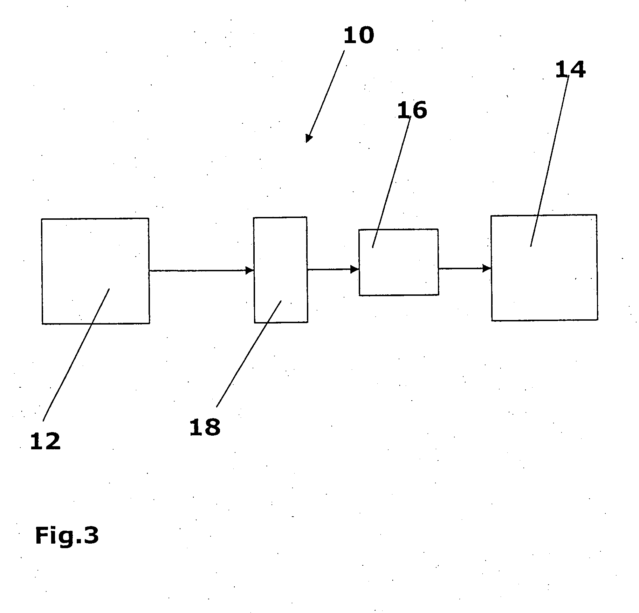

Die oben beschriebene messtechnische Bestimmung der effektiven Lichtstärke einer diskontinuierlich betriebenen LED-Lichtquelle erfolgt beispielsweise mit einem Messaufbau, wie er in Fig. 3 dargestellt ist. Das Messgerät 10 empfängt die Lichtblitze einer LED-Lichtquelle 12 und umfasst eine Auswerteeinheit 14, bei der es sich im Regelfall um einen Mikroprozessor handelt. Dem Mikroprozessor 14 wird das Ausgangssignal eines Photodetektors 16 zugeführt, dem ein Filter 18 vorgeschaltet ist, welches nur denjenigen Anteil des von der LED-Lichtquelle 12 ausgesandten Lichts zum Detektor 16 durchlässt, der der spektralen Lichtempfindlichkeit des menschlichen Auges entspricht.

Nach dem erfindungsgemäßen Verfahren wird zunächst der Intensitätsverlauf eines von der LED-Lichtquelle 12 ausgesandten Doppel- oder Mehrfachlichtblitzes vermessen. Die Messkurve wird anschießend in der Auswerteeinheit 14 integriert, und zwar unter Verwendung der oben beschriebenen Formfaktormethode.

Das hier aufgeführte Verfahren ist bei der Vermessung von diskreten Impulsreihen bis zu Einzelimpulsen von LED-Lichtquellen unabhängig von der Impulsform/breite einsetzbar. In diesem Zusammenhang sei anzumerken, dass die in Fig. 2 dargestellten Impulsformen idealisiert sind. Tatsächlich nimmt die Lichtstärke eines Impulses von seiner aufsteigenden Flanke bis zu seiner abfallenden Flanke exponentiell bis auf ein unterhalb des Anfangswerts liegendes Niveau ab. Zudem findet bei dem erfindungsgemäßen Verfahren der Nachleuchteffekt bei Impulsen eine Berücksichtigung im Zuge der messtechnischen Erfassung. Dadurch ist die Möglichkeit gegeben, Impulsgruppen als einheitliches Signal rechnerisch zusammenzufassen.

**Patentansprüche**

**1.** Messverfahren zur Bestimmung der effektiven Lichtstärke einer impulsförmig betriebenen LED-Lichtquelle unter Berücksichtigung der Physiologie der Rezeptoren des menschlichen Auges, bei dem

- mittels eines lichtempfindlichen Detektors ein von der LED-Lichtquelle abgegebenes Mehrfachimpuls-Lichtsignal vermessen wird, dessen Lichtimpulse voneinander einen Zeitabstand aufweisen, der kleiner ist als die Zeit, für die der Nachleuchteffekt der Rezeptoren des menschlichen Auges andauert, und
- mittels einer Auswerteeinheit das vermessene Mehrfachimpuls-Lichtsignal einer Integration unterzogen wird,
- wobei die Integration auf Basis der Formfaktormethode erfolgt.

**2.** Messverfahren nach Anspruch 1, **dadurch gekennzeichnet, dass** die Lichtimpulse voneinander einen Zeitabstand aufweisen, der kleiner als 140 ms, vorzugsweise kleiner als 100 ms und insbesondere kleiner als 50 ms ist.

3. Messverfahren nach Anspruch 1 oder 2, **dadurch gekennzeichnet, dass** die Dauer der Impulse mindestens 100 ms, vorzugsweise mindestens 150 ms beträgt.

I(t) [cd]

900 — 800 — 700 — 600 — 500 — 400 — 300 — 200 — 100 — 0

Nachleuchteffekt

Gemessenes Signal I(t)

Netzhautreizfunktion i(t)

$t_1$

$t_0$

t [ms]

0   50   100   150   200   250   300   350   400

i(t) in [cd]

1000000 — 900000 — 800000 — 700000 — 600000 — 500000 — 400000 — 300000 — 200000 — 100000 — 0

Fig.1 Graphische Darstellung der Netzhautreizfunktion

**Fig.2  Gemessene Impulsfolge**

EP 1 447 650 A1

**10**

**14**

**16**

**12**

**18**

**Fig.3**

**Europäisches Patentamt**

# EUROPÄISCHER RECHERCHENBERICHT

Nummer der Anmeldung

EP 04 00 2381

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | SCHMIDT-CLAUSEN HANS-JOACHIM: "COMPARISON OF DIFFERENT METHODS FOR THE DETERMINATION OF THE EFFECTIVE LUMINOUS INTENSITY OF SIGNAL LIGHTS IN THE FORM OF MULTIPLE PULSES" CIE J MAY 1982, Bd. 1, Nr. 1, Mai 1982 (1982-05), Seiten 18-22, XP009007847 * Seite 21, Spalte 1, Absatz 4 * ----- | 1 | G01J1/00 |
| X | [Online] XP002272425 Gefunden im Internet: URL:http://web.archive.org/web/20010823124 026/http://cie2.nist.gov/meetings/1999_War saw/Workshop_Proceeding4.htm> [gefunden am 2001-08-23] * Seite 5, letzter Absatz * ----- | 1 | |
| A | OHNO Y, NAKANO Y: "MINUTES OF CIE D1 D2 JOINT MEETING" MINUTES OF CIE MEETINGS, 6. April 2000 (2000-04-06), Seite 1-5, XP002235453 Teddington * Seite 4, Absatz 4 * ----- | 1 | RECHERCHIERTE SACHGEBIETE (Int.Cl.7)  G01J |

Der vorliegende Recherchenbericht wurde für alle Patentansprüche erstellt

| Recherchenort | Abschlußdatum der Recherche | Prüfer |
|---|---|---|
| München | 4. Maerz 2004 | Hambach, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)